# EUROPEAN PATENT SPECIFICATION

(11) **EP 0 313 530 B1**
(45) Date of publication and mention of the grant of the patent: **12.05.1993**
(21) Application number: 88850304.2
(22) Date of filing: 15.09.1988
(51) Int. Cl.: A01C 11/02

(54) **A planting machine**
Pflanzmaschine
Machine à planter

(30) Priority: 19.10.1987 SE 8704059
(43) Date of publication of application: 26.04.1989
(73) Proprietor: ROSENQVIST MEK. VERKSTAD AB, 291 91 Kristianstad (SE)
(72) Inventor: Rosenqvist, Lars, S-291 91 Kristianstad (SE)
(74) Representative: Andersson, Andy Rudy

(56) References cited:
- EP-A- 0 062 917
- DE-C- 928 130
- GB-A- 1 557 004

## Description

The present invention relates to a planting machine which is intended for depositing plants in furrows formed in the ground, earth or soil, hereinafter generally refered to as soil, and which comprises a frame carried by a number of rotatable wheels and one or more plant holding stations localized at a distance from the level of the soil, and further comprising one or more conveyors for feeding plants conveyed thereby sequentially down onto the soil such as to plant the plants singly in said furrows, and means for ensuring that only one plant at a time is placed in a furrow.

A planting machine of the aforesaid kind is known from EP 062 917. This machine includes a plant holding station, and the plants are transferred singly from this station to a driven conveyor belt or path which is inclined slightly in the forward direction of the machine. Co-acting with the conveyor belt is a gripping arrangement which grips the outermost plant on the conveyor belt at the same time as the next plant in line on the belt is prevented from further movement by a stop arrangement. The gripping arrangement comprises a mechanism which, through the intermediary of an excentric disc or plate, lifts-up the gripped plant and then lowers the plant against second transfer means, whereafter the plant is finally placed in the planting furrow. The gripping arrangement, which co-acts with a planting arm, is intended to move through a relatively long distance, which unavoidably limits the rate at which the plants are planted and therewith also the speed at which the machine works.

A further machine for depositing plants in furrows in accordance with the introduction is known from DE-C-928 130. A planting machine of this kind is mechanically complexed and includes means for separate transfer of plants from a loading plan, means for holding ouch plants and means for transmitting an initial movement and means for transferring a plant to a conveyor. The time it takes for each plant from a position on the loading plan to a position in the furrow is very long and the machine rate must thus be very low and the planting rate consequently also very low.

The object of the present invention is to provide an improved planting machine of the kind described in the introduction, such that the machine will have a simpler construction and a much higher planting capacity.

A significant feature of the invention resides in the fact that the conveyor path or paths discharge into a chute which extends substantially in the axial direction of the machine and in the proximity of the soil surface and in which a linearly displaceable, elongated plunger is intended to uncover the outlet of a conveyor belt in one machine-working phase, so as to permit a plant to be transferred to said chute, and to move said transferred plant towards the free end of the chute in another machine-working phase and placing the plant in the planting furrow while simultaneously closing the outlet of the conveyor belt or path.

Because the linearly displaceable, elongated plunger will ensure that plants are only fed singly from the machine and will also ensure that the plants are planted in the planting furrows, such an arrangement will provide a simplified machine construction. The planting chute, in which the plunger member moves backwards and forwards, can be given a short length, and by making the length of stroke of the plunger member correspondingly short there is obtained a much higher planting rate than was previously possible with the known planting machine.

Another object of the present invention is to combine an increased planting rate with a facility for ensuring that the plants are positioned correctly in the planting furrow. It will be understood that a fast planting rate is quite without meaning if the plants are placed crookedly in the furrow, thereby requiring the crooked plants to be Straightened manually aftear the machine has passed.

The improved planting machine will therefore include the feature Claim 2, according to which the free end of the chute discharges beneath the surface of the soil but above the bottom of the planting furrow, wherewith the plant being deposited in the furrow is guided until the very moment that its roots or bottom end comes into contact with the bottom of the planting furrow.

A further feature of the improved planting machine is set forth in claim 3, according to which means are provided for lifting-up soil on opposite sides of the plant immediately the plant has been placed in the planting furrow, thereby initially earthing up the plant.

Consequently, no separate machine is required for firming the plants in the soil, such firming of the soil being necessary to initiate vegetation of the plants.

Advantageous embodiments of the improved planting machine are set forth in the remainder of the depending claims.

An exemplifying embodiment of the invention will now be described with reference to the accompanying drawings, in which
Figure 1 is a schematic side view of the improved planting machine;
Figure 2 is a schematic view from above of part of the planting machine according to the invention; and
Figure 3 is a schematic view from above of the planting machine according to the invention and of which Figure 2 illustrates a part.

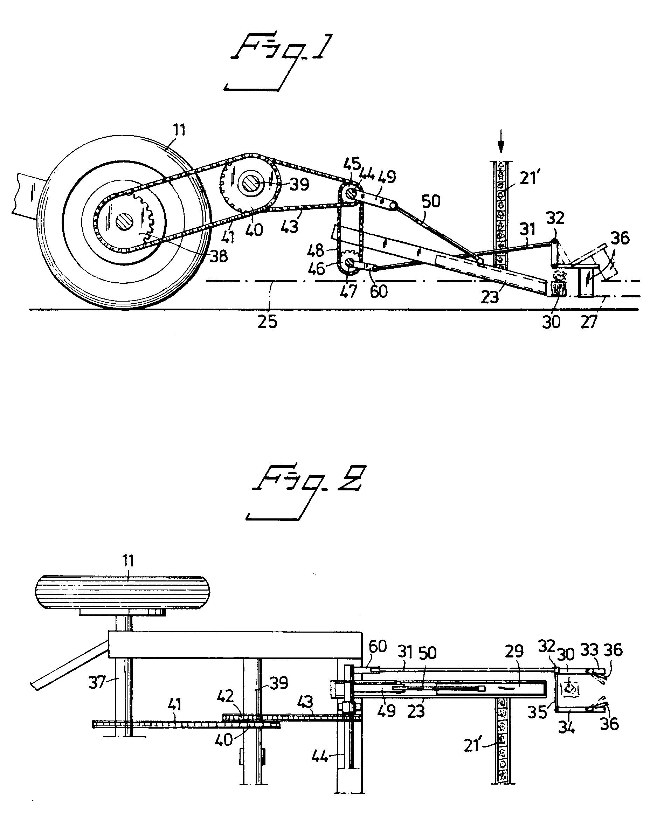

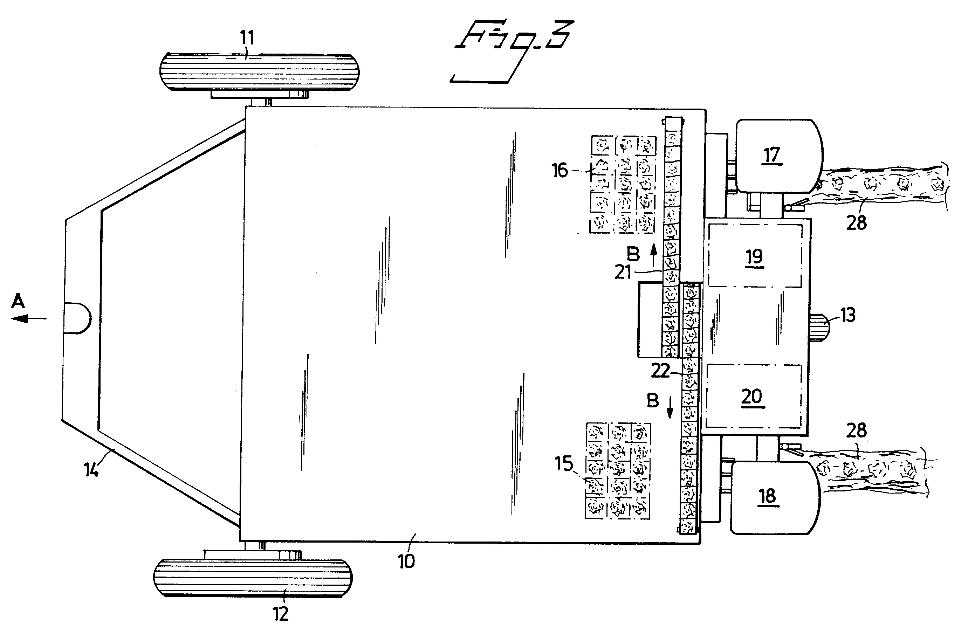

Figure 3 illustrates an inventive planting machine from above, this machine including a frame 10 which is carried by rotatable wheels 11, 12 arranged on respective sides of the frame, and a centre wheel 13 which is arranged at the rear end of the machine. The forward direction of the machine is indicated by the arrow A in Figure 3, and the machine is intended to be detachably connected to a towing vehicle by means of the frame part 14. Arranged in the upper part of the machine of the illustrated embodiment are two main holding or storing stations 15 and 16, which are intended to hold or store plants intended to be planted in the ground, earth or soil, hereinafter generally referred to as soil, the under parts of which stations are either cubic or round in shape. The reference numerals 17 and 18 designate seats intended for the machine operators, who sit facing one another and manually take plants from the stations 19 and 20 and place the plants in a row on a horizontal, or substantially horizontal conveyor belt or path 21, 22 respectively driven in the direction of the arrows B. Each of these conveyor belts 21, 22 merges with a respective conveyor path or belt which slopes towards the surface of the ground and of which one referenced 21′ is shown in Figures 1 and 2.

The free end of the inclined conveyor path 21′ discharges into a feed chute 23, the height or which can preferably be adjusted and which extends in the axial direction of the machine, approximately at right angles to the conveyor path 21′. The feed chute 23 is inclined rearwardly and downwardly, and the free end of the chute discharges beneath the level of the ground 25 at a small distance above the bottom 27 of the planting furrows 28.

Arranged for reciprocating movement in the feed chute 23 is a linearly displaceable device which is carried by the chute 23 and which has the form, for instance, of a relatively long plunger 29 (Figure 2) which in one working phase is intended to permit the first plant in the row of plants on the inclined conveyor path 21′ to enter the feed chute 23, and in another working phase is intended to be moved linearly in a manner such as to move the plant (generally identified at 30 in Figures 1, 2) transferred to the feed chute to the planting furrow 28, at the same time as the plunger 29 forms a barrier which prevents the plant next in line on the conveyor path 21′ from moving into the feed chute 23. As will be seen from Figure 1, the end of the plunger 29 is bevelled and thereby functions to guide the plant 30 in a manner to ensure that the plant will take a correct position in the furrow 28. The result of this particular feature is that the plant to be deposited in the furrow will have only a short free-fall and the risk of the plant toppling when coming into contact with the soil is eliminated almost totally. Because the height of the chute 23 can be adjusted, the chute can be adapted to varying furrow depths.

In order for the plants to vegetate, it is necessary to surround the stems of the plants with soil or earth. To this end, the inventive planting machine is provided with an arrangement whose construction is illustrated in Figures 1 and 2 and which comprises an arm 31 which extends in the longitudinal direction of the machine, parallel with the chute 23. Pivotally connected with one end 32 of the arm 31 is a first extension 33 and a second extension 34 which is spaced radially from said first extension 33 and positioned parallel therewith. These extensions 33, 34, which execute a synchronous working movement through the intermediary of a cross-shaft 35, are positioned so as to accomodate therebetween the plant 30 located in the furrow, and each of the extensions presents mutually facing, adjustable blades 35, 36. When a plant 30 is deposited in a planting furrow with the aid of the plunger 29 and the plunger commences a return stroke, the arm 31 executes a working movement which results in the blades 35, 36 being moved down into the soil, whereupon the blades, as a result of their angled positions (figure 2) lift soil up around the lower parts of the plants so as to provide initial conditions for plant vegetation.

As all who are skilled in this art will understand, the aforedescribed machine components can be driven in many different ways.

For example, the inventive planting machine may be self-propelling, wherewith the movements of the described machine components can be effected, e.g. through the intermediary of the output shaft of the engine. This, however, would restrict the use of the machine solely to that of planting plants, which can hardly be defended economically in view of the investment costs of such a machine. Consequently, it is preferred to construct the inventive planting machine so that it can be pulled by a tractor or some other towing vehicle. In accordance herewith, the Figures, particularly Figures 1 and 2 of the drawings, illustrate a preferred embodiment of the transmission system, only one half of the machine being shown.

The rotating carrier wheels 11, 12 of the planting machine are interconnected, in a known manner, through the rotatable shaft 37, which has firmly arranged thereon a toothed ring 38. Arranged on a rotatable frame shaft 39 is a second toothed ring 40. The toothed rings 38 and 40 are interconnected by an endless chain 41. Although not shown, the shafts 37 and 39 are provided with journal bushes in a known manner. The shaft 39 carries a second toothed ring 42, which is connected by means of an endless chain 43 with a third toothed ring 45 firmly mounted on a rotational shaft 44. A further toothed ring 46 is arranged immediately beneath the third toothed ring 45 and is firmly mounted on a further shaft 47, the toothed rings 45, 46 being connected together by means of an endless chain 48. As will be seen from Figure 2, one end of the shaft 43 carries a pin 60 which is pivotally connected to the arm 31. The shaft 43 is also provided with a short arm 49 which is pivotally connected to an arm 50, which in turn is pivotally connected to the plunger 29 arranged for reciprocating movement in the chute 23.

The aforedescribed transmission system operates in the following manner:

The horizontal conveyor belt or path 21 which, can be driven in the manner desired and on which the plants to be planted are placed by the machine operator, merges with the inclined conveyor belt or path 21′ and the plants are moved singly and sequentially downwards in a direction towards the outfeed chute 23. As the planting machine according to the invention is pulled forwards the carrier wheels 11 and 12 rotate and therewith also cause the wheel shaft 37 to rotate. This rotary movement is transferred to the rotatable intermediate shaft 39, via the toothed rings 38, 40 and the endless belt 41. Rotary movement of the shaft 39 is, in turn, transferred via the toothed rings 42, 45 to the rotatable third shaft 44, the rotary movement of which causes the arm 49 to pivot and therewith cause the plunger 29 to move reciprocatingly in the channel 23. As will be seen from Figure 2, the plunger 29 will normally present an obstacle to the transfer of a plant to the chute 23, although when the plunger 29 is withdrawn to a terminal position to an extent such that the discharge end of the conveyor belt 21′ is uncovered, the outermost plant on the conveyor belt is able to move into the feed chute 23. This movement phase in which the discharge end of the conveyor is uncovered is extremely short, however, and when the plunger moves towards the free end of the chute 23 in the following working phase, the plunger 29 will push along the plant discharged from the conveyor 21′ while, at the same time, ensuring that the now outermost plant on the conveyor belt 21′ if blocked against further forward movement. When the plunger 29 has reached the other terminal position in the chute 23, the plant to be planted is located immediately above the bottom of the planting furrow 27 and the extent of free-fall of the plant is very slight. Subsequent to the plant 30 being deposited in the furrow, the plunger 29 is withdrawn so as to permit the next plant on the conveyor belt 21′ to be released while, at the same time, the arm 31 moves and causes the blades 36 located on either side of the deposited plant 30 to move downwards and obliquely (Figure 2) so as to lift soil up and around the lower part of the plant 30.

Planting of the plants continues in this way, each plant being firmed in the planting furrow by the soil lifted around the lower parts thereof, and it will be understood that the faster the planting machine is moved, the more plants that are planted per unit of time. Since the working machine components are driven by a common drive source, i.e. the shaft 37, the co-action between the plunger 29 and the arm 31 will remain the same and ensure correct depositing of the plants.

The machine illustrated in Figure 1 has two stations and two operators and the transmission system illustrated in Figure 1 and 2 is naturally found on the other side or half of the machine, although not shown in these Figures. It will also be understood that the machine can have any desired width and that the stations, plungers 29 etc. may be more than two.

## Claims

1. A planting machine for depositing plants in planting furrows (28) formed in the soil, ground or earth, said machine comprising a frame carried by a number of rotatable wheels (11,12,13); one or more plant holding stations (15,16) which are localized at a distance from the ground surface; one or more conveyor paths (21,22) for moving plants transferred to said conveyor path or paths (21,22) sequentially towards the ground in a manner to plant said plants singly in said planting furrows (28); and further comprising means which ensure that only one plant at a time is deposited in a furrow, characterized in that said conveyor path or paths (21,21') discharge into a chute (23) which extends substantially in the axial direction of the machine in the proximity of the ground surface and in which there is arranged a linearly displaceable, elongated plunger (29) which plunger in one position uncovers the opening of a conveyor path to permit a plant to be moved into said chute (23) and in another position the plunger is intended to move in a manner to transfer said plant in a direction towards the free end of the chute (23) and deposit the plant in the planting furrow (28) while simultaneously covering the outlet or discharge end of the conveyor path (21').

2. A machine according to Claim 1, characterized in that the free end of the chute (23) discharges beneath ground level (25) but above the bottom (27) of the planting furrow (28).

3. A machine according to Claim 1, characterized by means (33,36) which subsequent to depositing a plant in said furrow causes foil to embrace the lower part of the plant.

4. A machine according to Claim 3, characterized by blades (35,36) which are located on both sides of the deposited plant and connected with a moveable arm (31), said blades being intended to cause soil to embrace the root end of the plant.

5. A machine according to Claim 4, characterized in that the arm (31) extends parallel with the feed tube (23); and in that the blades (35,36) are carried and localized by a system Of pivotal arms (32,33,34,35).

6. A machine according to one or more of the preceding claims and intended to be towed by a towing vehicle, characterized in that a rotatable shaft (37) carrying the wheels (11,12) is effective to cause movement of the plunger member (29) and of the blades (35,36) through the intermediary of a system of arms.

7. A machine according to one or more of the preceding claims, characterized in that the blades (35,36) can be adjusted in a manner to set the angle of the blades in relation to the forward movement of the machine.

## Patentansprüche

1. Pflanzmaschine zum Absetzen von Pflanzen in im Boden, Erdreich oder Gelände ausgebildeten Pflanzfurchen (28), mit einem von einer Anzahl drehbarer Räder (11, 12, 13) getragenen Rahmen, mit einer oder mehreren Pflanzenbevorratungs-Stationen (15, 16), die mit Abstand von der Bodenoberfläche angeordnet sind, mit einer oder mehreren Förderbahnen (21, 22) zur Bewegung der darauf aufgegebenen Pflanzen nacheinander zum Boden hin in einer Art und Weise, um die Pflanzen einzeln in die Pflanzfurchen (28) einzupflanzen sowie mit Mitteln, die sicherstellen, daß jeweils nur eine einzige Pflanze gleichzeitig in eine Furche eingesetzt wird, dadurch gekennzeichnet, daß die Förderbahn oder Förderbahnen (21, 21') in eine Rutsche (23) entlädt/entladen, die sich im wesentlichen in axialer Richtung der Maschine nahe der Bodenoberfläche erstreckt und in der ein linear verschieblicher Kolben (29) angeordnet ist, der in einer Stellung die Öffnung einer Förderbahn freilegt, damit eine Pflanze in die genannte Rutsche (23) gefördert werden kann, und der in einer anderen Stellung dazu bestimmt ist, sich in einer Art und Weise zu bewegen, um eine Pflanze in Richtung zum freien Ende der Rutsche (23) hin zu überführen und die Pflanze in der Pflanzfurche (28) abzulegen, während er gleichzeitig das Austritts- oder Auslaufende der Förderbahn (21') abdeckt.

2. Maschine nach Anspruch 1, dadurch gekennzeichnet, daß das freie Ende der Rutsche (23) unter Bodenniveau (25), jedoch oberhalb des Grundes (27) der Pflanzfurche (28) entlädt.

3. Maschine nach Anspruch 1, gekennzeichnet durch Mittel (33, 36), die im Anschluß an die Ablage einer Pflanze in die Furche eine Folie veranlassen, den unteren Teil der Pflanze einzuschließen.

4. Maschine nach Anspruch 3, gekennzeichnet durch Scharen (35, 36), die zu beiden Seiten der abgelegten Pflanze angeordnet und mit einem bewegbaren Arm (31) verbunden sind, wobei die Scharen dazu bestimmt sind, Erde zu veranlassen, die wurzelseitigen Enden der Pflanze zu umschließen.

5. Maschine nach Anspruch 4, dadurch gekennzeichnet, daß der Arm (31) sich parallel zum Förderrohr (23) erstreckt und dadurch, daß die Scharen (35, 36) von einem System schwenkbarer Arme (32, 33, 34, 35) getragen und örtlich festgelegt sind.

6. Maschine nach einem oder mehreren der vorhergehenden Ansprüche, die dazu bestimmt ist, von einem Zugfahrzeug gezogen zu werden, gekennzeichnet dadurch, daß eine die Räder (11, 12) lagernde Welle (37) wirksam wird, um das Kolbenglied (29) und die Scharen (35, 36) durch Vermittlung eines Systems von Armen anzutreiben.

7. Maschine nach einem oder mehreren der vorhergehenden Ansprüche, dadurch gekennzeichnet, daß die Scharen (35, 36) in einer solchen Art und Weise justiert werden können, daß der Winkel der Scharen mit Bezug zur Vorwärtsbewegung der Maschine eingestellt werden kann.

## Revendications

1. Une machine de plantation pour déposer des plantes dans des sillons de plantation (28) formés dans la terre ou le sol, cette machine comprenant un châssis porté par un certain nombre de roues pouvant tourner (11, 12, 13); un ou plusieurs emplacements de stockage de plantes (15, 16) qui se trouvent à une certaine distance de la surface du sol; un ou plusieurs chemins de transport (21, 22) pour transporter séquentiellement vers le sol des plantes qui sont transférées vers ce chemin ou ces chemins de transport (21, 22), de manière à planter les plantes une par une dans les sillons de plantation (28); et comprenant en outre des moyens qui font en sorte qu'une seule plante à la fois soit déposée dans un sillon, caractérisée en ce que le ou les chemins de transport (21, 21') débouchent dans une goulotte (23) qui s'étend pratiquement dans la direction axiale de la machine, à proximité de la surface du sol, et dans laquelle est disposé un piston allongé (29) pouvant se déplacer de façon rectiligne, avec une configuration dans laquelle, dans une position, le piston découvre l'ouverture d'un chemin de transport pour permettre à une plante de pénétrer dans la goulotte (23), et dans une autre position le piston se déplace de manière à transférer la plante en direction de l'extrémité libre de la goulotte (23) et à déposer la plante dans le sillon de plantation (28), tout en recouvrant simultanément l'extrémité de sortie ou d'évacuation du chemin de transport (21').

2. Une machine selon la revendication 1, caractérisée en ce que l'extrémité libre de la goulotte (23) débouche au-dessous du niveau du sol (25) mais au-dessus du fond (27) du sillon de plantation (28).

3. Une machine selon la revendication 1, caractérisée par des moyens (33, 36) qui, après le dépôt d'une plante dans le sillon, entourent la partie inférieure de la plante avec de la terre.

4. Une machine selon la revendication 3, caractérisée par des lames (35, 36) qui sont disposées de part et d'autre de la plante déposée et qui sont reliées à un bras mobile (31), ces lames étant destinées à entourer avec de la terre l'extrémité côté racines de la plante.

5. Une machine selon la revendication 4, caractérisée en ce que le bras (31) s'étend parallèlement à la goulotte (23); et en ce que les lames (35, 36) sont supportées et positionnées par un système de bras pivotants (32, 33, 34, 35).

6. Une machine selon une ou plusieurs des revendications précédentes, et prévue pour être remorquée par un véhicule de remorquage, caractérisée en ce qu'un arbre tournant (37) portant les roues (11, 12) produit le mouvement du piston (29) et des lames (35, 36) par l'intermédiaire d'un système de bras.

7. Une machine selon une ou plusieurs des revendications précédentes, caractérisée en ce que les lames (35, 36) peuvent être réglées de manière à fixer l'angle des lames en relation avec le mouvement d'avance de la machine.
